# EUROPEAN PATENT SPECIFICATION

(11) **EP 1 071 322 B1**
(45) Date of publication and mention of the grant of the patent: **02.07.2003**
(21) Application number: 99915939.5
(22) Date of filing: 14.04.1999
(51) Int. Cl.: A01M 1/02, A01M 1/10

(54) **INSECT ATTRACTING DEVICE**
INSEKTENLOCKVORRICHTUNG
DISPOSITIF SERVANT A ATTIRER LES INSECTES

(30) Priority: 14.04.1998 GB 9807665
(43) Date of publication of application: 31.01.2001
(73) Proprietor: AGRISENSE- BCS LIMITED, Pontypridd, Mid Glamorgan CF37 5SU, Wales (GB)
(72) Inventor: JONES, Owen, Lisvane, Cardiff CF4 5XG (GB); LISK, Jennifer Carol, Lisvane, Cardiff CF4 5XG (GB)
(74) Representative: Cawdell, Karen Teresa
(86) International application number: GB9901137
(87) International publication number: WO99052352

(56) References cited:
- EP-A- 0 547 828
- GB-A- 2 052 942
- US-A- 4 283 878
- US-A- 5 170 583
- US-A- 5 184 417

## Description

The present invention is concerned with a device and method for attracting insects and the like. A device according to the preamble of claim 1 is known from US-A-4 283 878.

As the world's population grows, much attention has been paid to methods of increasing the food supply. One element in such methods is the prevention of post-harvest losses resulting from the activities of insects and other pests during storage of foodstuffs. In addition to rendering the food unavailable in times of shortage, the activities of such pests result in economic loss associated with the presence of contaminants such as live and dead insects.

The traditional technique for control of pests (such as houseflies or the like) has been by the application of insecticides. Such insecticides are typically in the form of residual treatment and space sprays. The housefly (like other insects) has, however, developed high levels of resistance to many of the major groups of insecticides. Alternative means of control are therefore being sought.

In order for an insect control to be effective, it needs to rely on non-chemical means or on strategies which incorporate limited insecticide use and minimise the selection for resistance.

It is known to provide traps for the monitoring, study and control of flying insects. Such traps are of various designs and may be, for example, tent-shaped, plain strips of card and the like, or closed tubs having at their upper end a funnel shaped entrance area which permits entry of the insect into the tub but which prevents escape of a trapped insect therefrom.

It is known in the art that the addition of attractants to various traps can increase the efficiency of the trap. However, there is a fundamental problem with such an approach, which is that because many attractants have relatively large molecules, with a carbon chain of 16 or more (for example, the pheromone for the common housefly is tricosene which has the chemical formula C₂₃H₄₆), the attractants have a very low volatility. The range over which an insect can detect and respond to such non-volatile attractants is therefore limited.

It is therefore an aim of the present invention to provide an improved method and apparatus for attracting insects and the like.

According to a first aspect of the present invention, there is provided apparatus for attracting insects, which apparatus includes insect trapping means, a body containing at least one evaporatable insect attractive compound for sustained release therefrom, and heating means arranged for heating the body when the latter is in or near said trapping means.

The at least one insect attractive compound preferably has from 16 to 30 carbon atoms. Typically such compounds have melting temperatures at or above ambient temperature. A preferred such compound is a pheromone. When the insect is the common housefly, such a pheromone preferably comprises Z-9-tricosene.

The heating means is preferably arranged to be set at a temperature of about 70 degrees Celsius. For example, the heating means is preferably provided with a thermostat arranged to ensure that the heating means is maintained within five degrees Celsius of a predetermined temperature (such as about 70 degrees Celsius).

The heating means is preferably arranged to be electrically heated, and may, for example, be mains power operated or battery operated. Such heating means preferably comprise a heating element provided in or on an opaque thermally resistant matrix, and means for connecting said heating element to a power supply. However, when the apparatus is to be used in the field, it is preferred that the power supply is an electrical battery.

The sustained release formulation is preferably positioned in close proximity to the heating means so as to enhance evaporative release of the at least one attractant.

The trapping means may be for example, tent-shaped, plain strips of card or the like, or a closed tub having at its upper end a funnel shaped entrance area which permits entry of one or more insects into the tub but prevents the escape of insects therefrom. Examples of suitable such trapping means are described in GB-A-2052942; other suitable trapping means are described in US-A-5170583.

The heating means is preferably positioned within the interior of such a tub, more preferably at the upper end of the tub close to the funnel.

The apparatus further includes a light source, such as an electrical bulb or the like.

According to a second aspect of the invention there is provided a method of attracting insects which method includes providing apparatus according to the invention, and heating the formulation using said heating means so as to permit release of said attractant therefrom.

It is preferred that the at least one attractant is heated to within about five degrees Celsius of a predetermined temperature, such as about 70 degrees Celsius.

Preferred features of the invention will now be described, by way of illustration only, with reference to the accompanying drawings, in which:
Figure 1 is a side elevation of exemplary apparatus according to the invention;
Figure 2 is a plan view of the underside of the cover member of the apparatus of Figure 1; and
Figure 3 shows an arrangement of several traps according to the invention, when in use in trials described in the following Examples.

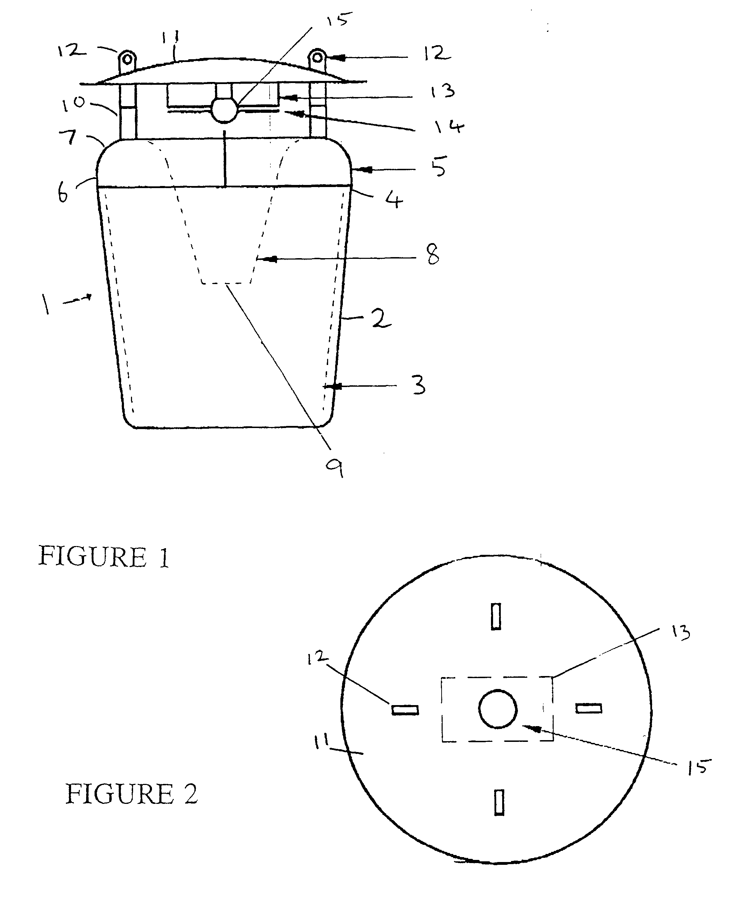

Referring to Figure 1, there is shown an insect trap generally designated 1, the trap having an insect-receiving tub 2 with a liner 3 of sticky sheet material. Covering the open end 4 of tub 2 is a removable funnel 5. The funnel includes a skirt portion 6 which is removably attached to the tub by a screw thread (not shown) or the like, an upwardly extending curved portion 7, and a downwardly extending constricted tubular portion 8 for which the narrow end 9 extends into the interior of the tub 2. Mounted to the curved portion are a series of legs 10 which support a concave cover 11, having on an upper face, a series of hanging lugs 12.

To the underside of cover 11 is secured a battery operable heater 13, and adjacent thereto, a lure pad containing a sustained release material for release of an insect-attractive compound as indicated above. Also secured to the underside of cover 11 is a light sensor (see Figure 2).

In use, the heater 13 is activated and thermostatically controlled to permit sustained release of insect attractant from the insect-attractive compound.

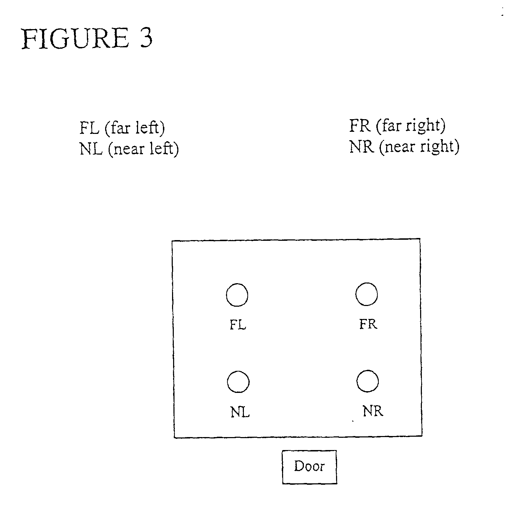

The invention may be more clearly understood from the following illustrative examples, in which reference is made to Figure 3 of the accompanying drawing:

### Example 1: Field Trials

The field trials took place at a poultry farm which had a number of sheds each housing battery chickens. Houseflies are common pests at such sites, because they breed in putrefying matter, and can develop in large numbers in poultry manure under the caged hens. Experiments were carried out in two chicken sheds.

In both chicken sheds, funnel-type test traps as described above with reference to Figures 1 and 2 were suspended from the ceiling. The traps had heaters either incorporated in the underside of the cover member, as described above with reference to Figures 1 and 2, or in the base of the tub.

Each trap had a pheromone-releasing lure held in place on a heater pad by cross-wires. Each lure consisted of 400mg tricosene dosed onto cellulose board 25mm x 50mm in size. The four traps in this experiment were set up as follows:
Trap 1: no power, heater in base of funnel.
Trap 2: no power, heater in lid of funnel.
Trap 3: with power, heater in base.
Trap 4: with power, heater in lid of funnel.

The heater pads in the traps were set to run at 70°C. The results of the experiments are gauged by the number of flies caught on each day. The results are as follows:

| | **Trap 1** | **Trap 2** | **Trap 3** | **Trap 4** |
|---|---|---|---|---|
| **Day 1** | 5 | 47 | 500+ | 135 |
| **Day 2** | 1 | 52 | 94 | 57 |
| **Day 3** | 18 | 232 | 395 | 676 |
| **Day 4** | 31 | 267 | 780 | 880 |
| **Day 5** | 40 | 46 | 175 | 432 |

It can be seen from the results that the traps which had heated pads caught significantly more flies than the traps which did not have heated pads. In addition, it can be seen that more flies were trapped if a heated pad was in the lid of the funnel, presumably because in this location the pheromone is allowed to circulate more freely.

### Example 2: Laboratory Trials

The laboratory trials took place in a controllable environment. The test chambers were large enough to accommodate four funnel traps; the arrangement of the traps being illustrated in Figure 3. The traps were suspended from two lines running across the room at approximately 1.8 metres above the floor.

Houseflies were supplied as pupae and were kept in a mesh cage until emergence. A new group of flies were released into the room and allowed to fly freely for the duration of each test. After this time, the number of flies caught in each trap was counted.

With reference to the following tables, H represents heat present in the trap, L represents light present in the trap and P represents pheromone present in the trap.

### Series 1:

Series 1 was designed to determine the influence of light on the number of flies caught in the traps.

### Day 6

| **Trap** | **Parameter** | **Count** | **Trap** | **Parameter** | **Count** |
|---|---|---|---|---|---|
| **FL** | H | 2 | **FR** | Blank | 2 |
| **NL** | Blank | 0 | **NR** | H | 9 |
| **FL** | Blank | 2 | **FR** | H | 1 |
| **NL** | H | 7 | **NR** | Blank | 1 |

Very low numbers were caught in spite of the release of large number of flies.

### Day 7

| **Trap** | **Parameter** | **Count** | **Trap** | **Parameter** | **Count** |
|---|---|---|---|---|---|
| **FL** | H | 8 | **FR** | L | 99 |
| **NL** | L | 63 | **NR** | H | 23 |

Traps with light only were more attractive than traps with heat only, but the combination of heat and light was most effective.

### Day 8

| **Trap** | **Parameter** | **Count** | **Trap** | **Parameter** | **Count** |
|---|---|---|---|---|---|
| **FL** | H | 9 | **FR** | HL | 122 |
| **NL** | HL | 88 | **NR** | H | 35 |

### Day 9

| **Trap** | **Parameter** | **Count** | **Trap** | **Parameter** | **Count** |
|---|---|---|---|---|---|
| **FL** | P | 3 | **FR** | Blank | 2 |
| **NL** | Blank | 0 | **NR** | P | 9 |

### Day 10

| **Trap** | **Parameter** | **Count** | **Trap** | **Parameter** | **Count** |
|---|---|---|---|---|---|
| **FL** | PL | 29 | **FR** | Blank | 2 |
| **NL** | Blank | 0 | **NR** | PL | 51 |

### Day 11

| **Trap** | **Parameter** | **Count** | **Trap** | **Parameter** | **Count** |
|---|---|---|---|---|---|
| **FL** | Blank | 7 | **FR** | PL | 94 |
| **NL** | PL | 66 | **NR** | Blank | 1 |

The presence of light and pheromone-releasing body resulted in increased trap catch. Traps with pheromone-releasing body plus light caught almost 100% of the flies in the room.

The first two tests (day 6) show that with no light in the room, and no pheromone either, the catches in all of the traps were very low, in spite of there being approximately 100 flies released into the room. The data from day 8 shows that a combination of heat and light was more attractive than heat alone. The combination of heat and light does not appear to be more attractive than heat alone, indicating that, in the absence of pheromone, it is only the light which has any influence on the trap catch.

### Series 2:

The previous results indicated that trap catches are greater in the presence of light; therefore, tests in series 2 were carried out in the presence of light. The test results were as follows:

Traps were set up again when a new supply of houseflies were available. Room lights on for the next 2 tests.

### Day 12

| **Trap** | **Parameter** | **Count** | **Trap** | **Parameter** | **Count** |
|---|---|---|---|---|---|
| **FL** | PH | 19 | **FR** | P | 34 |
| **NL** | P | 3 | **NR** | PH | 39 |

### Day 13

| **Trap** | **Parameter** | **Count** | **Trap** | **Parameter** | **Count** |
|---|---|---|---|---|---|
| **FL** | P | 10 | **FR** | PH | 46 |
| **NL** | PH | 25 | **NR** | P | 8 |

Pn day 13 the room light was switched off. The light remained switched off for the next test

### Day 14

| **Trap** | **Parameter** | **Count** | **Trap** | **Parameter** | **Count** |
|---|---|---|---|---|---|
| **FL** | P | 1 | **FR** | PH | 11 |
| **NL** | PH | 9 | **NR** | P | 2 |

With no light in room the trap catch is very low, but the heated pheromone still attracted more flies than the unheated lures.

The light was switched back on for a repeat of day 13 test

### Day 15

| **Trap** | **Parameter** | **Count** | **Trap** | **Parameter** | **Count** |
|---|---|---|---|---|---|
| **FL** | PH | 10 | **FR** | P | 13 |
| **NL** | P | 3 | **NR** | PH | 24 |

A pheromone pad was present in every trap. In the first two tests, the traps with heated pheromone caught significantly more flies than the traps without heat. On day 12, the pheromone and heat traps caught 61% of the total catch and on day 13, they caught 80%.

The room light was switched off for day 14 and the results show that the catch dropped dramatically, confirming the need for light before the flies respond to other factors. In dark conditions, however, the data shows that 90% of flies are caught in the traps where the pheromone was heated.

## Claims

1. Apparatus for attracting insects or the like, which apparatus includes:
(a) insect trapping means (2,3);
(b) a body containing at least one evaporatable insect attractive compound having 16 to 30 carbon atoms and a melting temperature above ambient temperature, said body being such that sustained release of said insect attractive compound is permitted from said body when said body is within a predetermined temperature range;
(c) electrical heating means (13) arranged for heating said body when said body is in or near said trapping means; **characterised by**
(d) a thermostat for said heating means, said thermostat being arranged to control said heating means such that said body is maintained in the predetermined temperature range between a first temperature and a second temperature, the second temperature being lower than the first temperature; and
(e) a light source for illuminating said trapping means.

2. Apparatus according to claim 1, wherein the second temperature is about 65°C and the first temperature is about 75°C and/or the insect attractive compound is a pheromone.

3. Apparatus according to claim 1 or 2, wherein the insect attractive compound is attractive to the housefly and preferably includes Z-9-tricosene.

4. Apparatus according to any of claims 1 to 3, wherein the heating means is provided with mains power or battery electrical supply.

5. Apparatus according to any of claims 1 to 4, wherein said heating means comprises a heating element provided in or on an opaque thermally resistant matrix, and means for connecting the heating element to a power supply.

6. Apparatus according to any of claims 1 to 5, wherein the insect attractive compound is in close proximity to the heating means.

7. Apparatus according to any of claims 1 to 6, wherein the trapping means is tent shaped, plain strips of card or the like.

8. Apparatus according to any of claims 1 to 7, wherein the trapping means is a closed tub having a funnel shaped entrance at an upper end which permits entry of one or more insects into the tub but substantially prevents the escape of insects therefrom.

9. Apparatus according to claim 8, wherein the heating means is within the interior of the tub, preferably at the upper end of the tub.

10. A method of attracting insects or the like which includes:
(a) providing apparatus according to any of claims 1 to 9;
(b) supplying electrical power to the heating means so as to heat the body and thereby permit release of the insect attractive compound therefrom; and
(c) thermostatically controlling said electrical power using said thermostat so as to maintain said body within said predetermined temperature range.

## Patentansprüche

1. Vorrichtung zum Anlocken von Insekten und dergleichen, die enthält:
(a) ein Insektenfangmittel (2, 3);
(b) einen Körper, der zumindest eine verdampfbare, Insekten anziehende Zusammensetzung aufweist, die 16 bis 30 Kohlenstoffatome enthält und eine Schmelztemperatur oberhalb der Umgebungstemperatur aufweist, wobei der Körper in der Weise gestaltet ist, dass die anhaltende Freigabe der Insekten anziehenden Zusammensetzung von dem Körper ermöglicht ist, wenn sich der Körper in einem vorbestimmten Temperaturbereich befindet;
(c) ein elektrisches Heizmittel (13), das zum Beheizen des Körpers angeordnet ist, wenn der Körper sich in oder nahe dem Fangmittel befindet, **gekennzeichnet durch**,
(d) einen Temperaturregler für das Heizmittel, wobei der Temperaturregler angeordnet ist, um das Heizmittel In der Weise zu steuern, dass der Körper in dem vorbestimmten Temperaturbereich zwischen einer ersten und einer zweiten Temperatur gehalten ist, wobei die zweite Temperatur niedriger ist als die erste Temperatur; und
(e) eine Lichtquelle zum Bestrahlen des Fangmittels.

2. Vorrichtung nach Anspruch 1, bei der die zweite Temperatur ca. 65°C und die erste Temperatur ca. 75°C beträgt und/oder bei der die Insekten anziehende zusammensetzung ein Pheromon ist.

3. Vorrichtung nach Anspruch 1 oder 2, bei der die Insekten anziehende Zusammensetzung Hausfliegen anzieht und vorzugsweise Z-9-Tricosen enthält.

4. Vorrichtung nach einem der Ansprüche 1 bis 3, bei der das Heizmittel für eine Versorgung mit elektrischen Haushaltsstrom oder durch Batterien ausgerüstet ist.

5. Vorrichtung nach einem der Ansprüche 1 bis 4, bei der das Heizmittel ein Heizelement, welches in oder an einer lichtundurchlässigen, thermisch widerstandsfähigen Matrix angeordnet ist, und Mittel zum Verbinden des Heizelements mit einer Energiequelle enthält.

6. Vorrichtung nach einem der Ansprüche 1 bis 5, bei der die Insekten anziehende Zusammensetzung In unmittelbarer Nähe zu dem Helzmittel angeordnet ist.

7. Vorrichtung nach einem der Ansprüche 1 bis 6, bei der das Fangmittel zeltförmig ist und aus glatten Kartonstreifen und dergleichen besteht.

8. Vorrichtung nach einem der Ansprüche 1 bis 7, bei der das Fangmittel ein geschlossenes Rohr ist, welches einen trichterförmigen Eingang an einem oberen Ende aufweist, der den Zugang eines oder mehrerer Insekten in das Rohr ermöglicht, jedoch das Entweichen der Insekten hieraus Im Wesentlichen verhindert.

9. Vorrichtung nach Anspruch 8, bei der das Heizmittel innerhalb des Innenraumes des Rohres, vorzugsweise an dem oberen Ende des Rohres angeordnet ist.

10. Verfahren zum Anlocken von Insekten und dergleichen, welches enthält:
(a) Bereitstellen einer Vorrichtung gemäß einem der Ansprüche 1 bis 9;
(b) Zuführen von elektrischer Energie zu dem Heizmittel, um den Körper zu erhitzen und dabei die Freigabe der Insekten anziehenden Zusammensetzung zu ermöglichen; und
(c) thermostatische Steuerung der elektrischen Energie unter Verwendung des Temperaturreglers, um den Körper innerhalb des vorbestimmten Temperaturbereichs zu halten.

## Revendications

1. Appareil pour attirer les insectes ou similaires, cet appareil comportant
(a) des moyens (2,3) pour piéger les insectes ;
(b) un corps contenant au moins un composé attirant les insectes et pouvant s'évaporer, ayant 16 à 30 atomes de carbone et une température de fusion supérieure à la température ambiante, ledit corps étant tel qu'un dégagement durable dudit composé attirant les insectes est possible à partir dudit corps lorsque ledit corps se trouve dans les limites d'une gamme de températures prédéterminée ;
(c) des moyens de chauffage électrique (13) agencés pour chauffer ledit corps lorsque ledit corps se trouve dans ou près desdits moyens formant piége; **caractérisé par**
(d) un thermostat pour lesdits moyens de chauffage, ledit thermostat étant adapté pour commander lesdits moyens de chauffage de telle sorte que ledit corps est maintenu dans ladite gamme de températures prédéterminée entre une première température et une seconde température, la seconde température étant inférieure à la première température ; et
(e) une source de lumière pour éclairer ledit moyen formant piège.

2. Appareil selon la revendication 1, dans lequel la seconde température est d'environ 65 °C et la première température est d'environ 75 °C, et/ou le composé attirant les insectes est une phéromone.

3. Appareil selon l'une des revendications 1 ou 2, dans lequel le composé attirant les insectes attire les mouches de maison et comporte de préférence du Z-9-tricosène.

4. Appareil selon l'une quelconque des revendications 1 à 3, dans lequel les moyens de chauffage sont munis d'une alimentation électrique par pile ou par secteur.

5. Appareil selon l'une quelconque des revendications 1 à 4, dans lequel lesdits moyens de chauffage comprennent un élément chauffant fourni dans ou sur une matrice opaque résistante à la chaleur, et des moyens de connexion de l'élément chauffant à une source d'énergie.

6. Appareil selon l'une quelconque des revendications 1 à 5, dans lequel le composé attirant les insectes se trouve à proximité des moyens de chauffage.

7. Appareil selon l'une quelconque des revendications 1 à 6, dans lequel les moyens formant piège ont la forme d'une tente, de bandelettes plates de carton ou similaire.

8. Appareil selon l'une quelconque des revendications 1 à 7, dans lequel les moyens formant piège sont un récipient fermé ayant une entrée en forme d'entonnoir au niveau d'une extrémité supérieure qui permet l'entrée d'un ou de plusieurs insectes dans le récipient mais empêche sensiblement que les insectes s'en échappent.

9. Appareil selon la revendication 8, dans lequel les moyens de chauffage se trouvent à l'intérieur du récipient, de préférence au niveau de l'extrémité supérieure du récipient.

10. Procédé pour attirer les insectes ou similaires, qui comporte :
(a) la fourniture d'un appareil selon l'une quelconque des revendications 1 à 9 ;
(b) la fourniture d'une alimentation électrique aux moyens de chauffage de façon à chauffer le corps et ainsi de permettre le dégagement du composé attirant les insectes de celui-ci ; et
(c) la commande thermostatique de ladite alimentation électrique en utilisant ledit thermostat, de façon à maintenir ledit corps dans les limites de ladite gamme de températures prédéterminée.
